# FASCICULE DE BREVET EUROPEEN

(11) **EP 3 220 037 B1**
(45) Date de publication et mention de la délivrance du brevet: **03.07.2019**
(21) Numéro de dépôt: 17159531.7
(22) Date de dépôt: 07.03.2017
(51) Int. Cl.: F16M 11/20, F16M 13/02

(54) **SYSTEME SUPPORT POUR ECRAN PLAT ET PROCEDE DE MISE EN OEUVRE**
HALTEVORRICHTUNG FÜR FLACHBILDSCHIRME UND BEDIENUNGSVERFAHREN
SUPPORT SYSTEM FOR FLAT SCREEN AND METHOD FOR OPERATION

(30) Priorité: 18.03.2016 FR 1652319
(43) Date de publication de la demande: 20.09.2017
(73) Titulaire: Erard, 38230 Chavanoz (FR)
(72) Inventeur: VERRIERE, Eric, 69004 LYON (FR); BONNEMERE, Patrick, 69004 LYON (FR); PERRINET, Jean-François, 01150 LAGNIEU (FR)
(74) Mandataire: Cabinet Laurent & Charras

(56) Documents cités:
- US-A- 4 527 942
- US-A- 5 975 472
- US-A1- 2009 194 649

## Description

La présente invention concerne un système support pour écran plat, de type plasma, LCD, LED, OLED ou similaire. L'invention concerne également un procédé de mise en oeuvre d'un tel support.

Depuis de nombreuses années, les écrans plats ont largement supplanté les écrans cathodiques particulièrement encombrants. Ces écrans mettent en oeuvre des technologies plasma, LCD, LED, OLED ou similaires, notamment pour télévision ou ordinateur. Ces écrans présentent un faible encombrement et peuvent ainsi être fixés directement sur une surface de fixation verticale, telle qu'un mur, une colonne, un meuble, etc. En pratique, l'orientation de l'écran est ajustée pour offrir une vision optimale aux utilisateurs.

EP2369219 décrit un exemple de système support, comprend une platine arrière fixée au mur et un cintre avant auquel l'écran est fixé. La platine comporte des orifices de réception de rondelles, qui sont pourvues de fentes radiales pour le passage de vis de fixation au mur. Ces rondelles constituent des moyens de réglage de l'horizontalité de la platine par rapport au mur. Cette horizontalité est "préréglée" lorsque la platine est fixée au mur.

EP1806529 et DE202014102269 décrivent d'autres exemples de systèmes supports, comprenant une platine arrière, une structure avant et un bras articulé. La platine arrière est fixée au mur, tandis que l'écran plat est fixé à la structure avant. Le bras articulé relie la platine arrière et la structure avant, facilitant ainsi le réglage de l'orientation de l'écran par rapport au mur.

Dans EP1806529, un dispositif de réglage de l'orientation de l'écran est intégré à la structure avant. Ce dispositif est conformé comme une rotule, permettant de régler à la fois l'horizontalité et la verticalité de l'écran. Ce dispositif présente néanmoins une construction complexe. En outre, lorsque les éléments constitutifs du dispositif subissent une usure dans le temps, l'écran est susceptible de s'affaisser sous son propre poids.

Dans DE202014102269, un dispositif de réglage de la verticalité de l'écran est agencé entre le bras articulé et la structure avant. Ce dispositif comprend des moyens d'ajustement pour ajuster une position neutre, ainsi que des moyens de verrouillage pour bloquer la structure avant dans la position neutre.

Le document US20090194649 A1 divulgue un système connu de support pour écran.

Le but de la présente invention est de proposer un système support amélioré.

A cet effet, l'invention a pour objet un système support pour écran plat, de type plasma, LCD, LED, OLED ou similaire, comprenant : une platine arrière conçue pour être fixée sur une surface de fixation verticale ; une structure avant conçue pour supporter l'écran plat ; un bras articulé reliant la platine arrière et la structure avant ; et un dispositif de réglage de l'horizontalité du bras articulé et de la structure avant.

Le système support est caractérisé en ce que le dispositif de réglage est agencé sur la platine arrière, est actionnable alors que la platine arrière est fixée à la surface de fixation, et comprend :
- un premier élément comprenant une tige qui s'étend selon un axe de tige sensiblement vertical et supporte l'extrémité arrière du bras articulé ; et
- un second élément coopérant avec le premier élément ;
l'extrémité arrière du bras étant articulé sur la tige, en liaison pivot autour de l'axe de ladite tige ;
une rotation du second élément entraînant une inclinaison latérale de la tige, du bras et de la structure avant ;
dans lequel :
- soit le premier élément comprend la tige, tandis que le second élément est une vis de réglage qui s'étend selon un axe de vis sensiblement horizontal et coopère avec la tige ;
- soit le premier élément comprend la tige et une crémaillère qui coopère avec le second élément, lequel comprend un manche et une roue dentée qui coopère avec la crémaillère ; ou
- soit le premier élément comprend la tige et une portion excentrique munie d'un pion qui coopère avec le second élément, lequel comprend un manche et une came munie d'une rainure courbée qui reçoit le pion.

Ainsi, l'invention permet de régler l'horizontalité de l'écran de manière simple et pratique, pour le confort de l'utilisateur. Ce réglage peut être réalisé avec une grande précision, ce qui permet d'obtenir une horizontalité optimale sur toute la plage de déplacement du bras, de gauche à droite. Le dispositif de réglage sert uniquement à ajuster l'horizontalité de l'écran, avec une précision et une stabilité améliorées par rapport à un dispositif servant à ajuster à la fois l'horizontalité et la verticalité de l'écran.

Comme détaillé dans la description ci-après, le dispositif de réglage présente une construction relativement simple et résistante, incluant un nombre d'éléments constitutifs réduit, en comparaison avec certains dispositifs existants.

Selon d'autres caractéristiques avantageuses de l'invention, prises isolément ou en combinaison :
- Le premier élément et le second élément coopèrent directement, sans pièce intermédiaire agencée entre eux.
- Le premier élément et le second élément coopèrent indirectement, avec au moins une pièce intermédiaire agencée entre eux.
- La vis de réglage est disposée à travers la tige.
- L'axe du premier élément est mobile dans un plan parallèle à la platine arrière.
- Le dispositif de réglage comprend un organe d'appui qui est solidaire de la platine arrière et qui comporte des orifices de montage du premier élément et des orifices de montage du second élément.
- L'organe d'appui est solidarisé à la platine arrière par soudage.
- L'organe d'appui et la platine arrière constituent une seule pièce.
- Une rondelle ressort est positionnée entre une tête du second élément et une portion verticale de l'organe d'appui.
- Une deuxième rondelle ressort est positionnée entre un ensemble écrou contre-écrou et une autre portion verticale de l'organe d'appui, à une extrémité du second élément opposée à la tête du second élément.
- Les orifices de montage du premier élément incluent, d'une part, un orifice oblong ménagé à proximité du second élément et, d'autre part, un orifice circulaire ménagé à distance du second élément.
- L'orifice oblong de montage du premier élément est allongé selon une direction horizontale parallèle à l'axe du second élément.
- Les orifices de montage du second élément sont des orifices oblongs allongés selon une direction verticale.
- Le bras articulé comprend une unique section articulée à l'extrémité arrière sur le dispositif de réglage et à une extrémité avant sur la structure avant.
- Le bras articulé comprend plusieurs sections articulées entre elles.

L'invention a également pour objet un procédé de mise en oeuvre d'un système support tel que mentionné ci-dessus, caractérisé en ce que le procédé comprend les étapes successives suivantes :
a) fixer la platine arrière sur la surface de fixation verticale ; puis
b) actionner en rotation le second élément du dispositif de réglage agencé sur la platine arrière, pour incliner latéralement la tige et ainsi régler l'horizontalité du bras articulé et de la structure avant.

L'invention sera mieux comprise à la lecture de la description qui va suivre, donnée uniquement à titre d'exemple non limitatif et faite en référence aux dessins annexés sur lesquels :
- la figure 1 est une vue en perspective du système support conforme à l'invention, comprenant une platine arrière, une structure avant, un bras articulé, et un dispositif de réglage de l'horizontalité ;
- la figure 2 est une vue en perspective analogue à la figure 1, à plus grande échelle, montrant la platine, le dispositif de réglage et l'extrémité arrière du bras ;
- la figure 3 est une vue en perspective analogue à la figure 2, montrant uniquement la platine et le dispositif de réglage ;
- la figure 4 est une vue à plus grande échelle du détail IV à la figure 3 ;
- les figures 5 à 7 sont des vues avant du système support, montrant différents réglages de l'horizontalité ; et
- les figures 8 et 9 sont des vues analogues à la figure 4, partielles et à plus petite échelle, montrant d'autres modes de réalisation de l'invention.

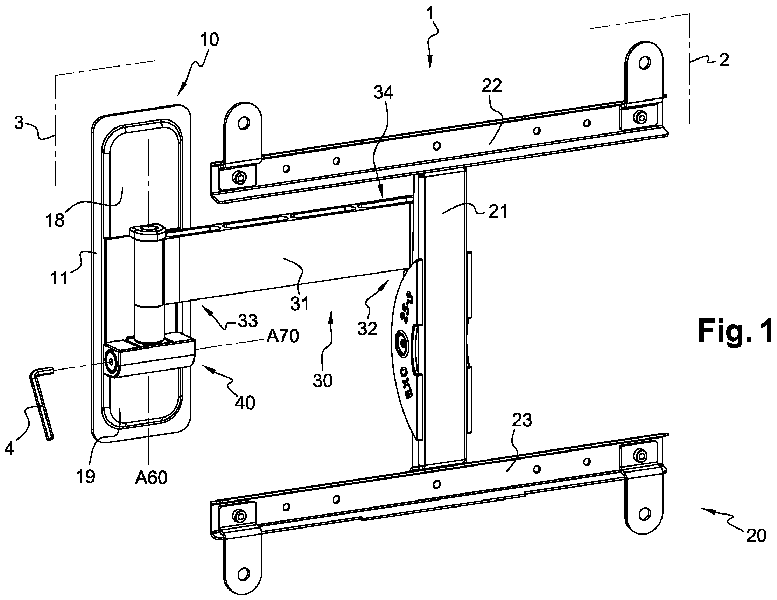

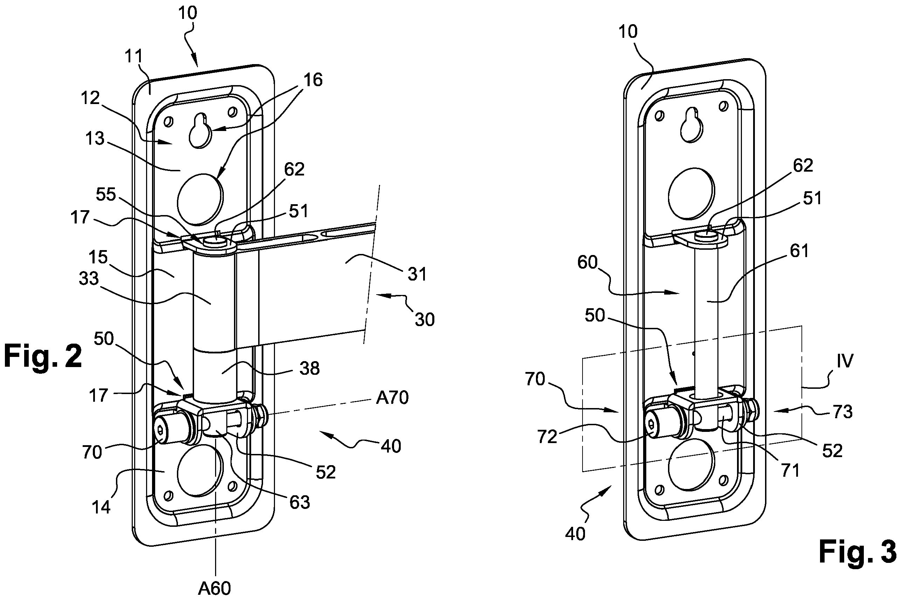

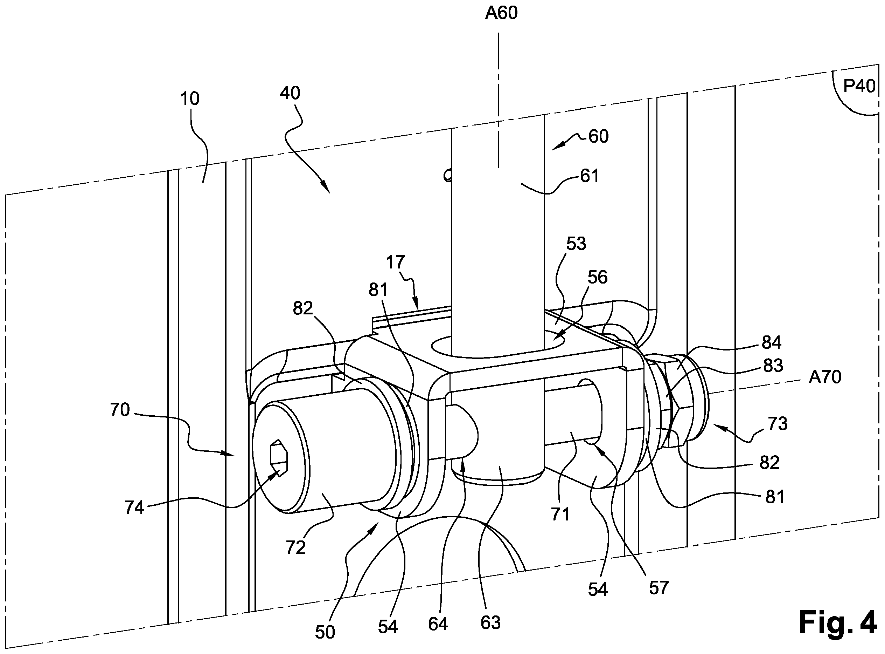

Sur les figures 1 à 7 est représenté un système support 1 conforme à l'invention, conçu pour supporter un écran plat 2, de type plasma, LCD ou similaire. Le système 1 est fixé sur une surface de fixation verticale 3, par exemple un mur, une colonne, un meuble, etc.

L'écran 2 et la surface 3 sont représentés partiellement et schématiquement par des pointilles à la figure 1 uniquement, dans un but de simplification.

Le système support 1 comprend une platine arrière 10, une structure avant 20 et un bras articulé 30. La platine 10 est conçue pour être fixée à la surface 3, tandis que la structure avant 20 est conçue pour supporter l'écran 2. Le bras articulé 30 relie la platine 10 et la structure 20.

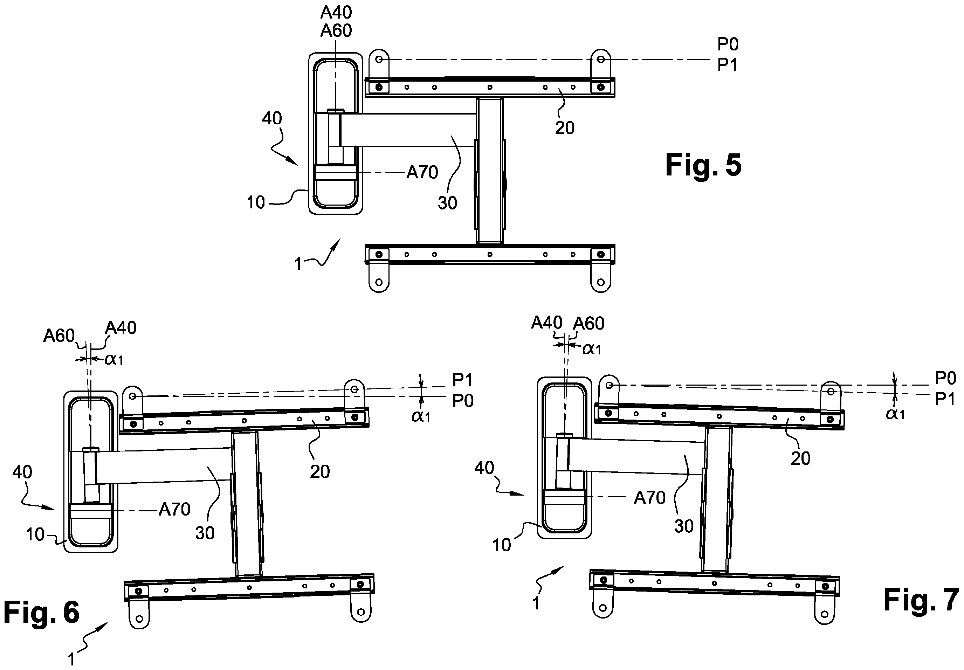

Le système 1 comprend également un dispositif de réglage 40 de l'horizontalité du bras 30 et de la structure 20, et donc de l'horizontalité de l'écran 2. L'horizontalité du bras 30 et de la structure 20 peut être définie comme leur inclinaison par rapport à un plan horizontal P0, comme détaillé ci-après en référence aux figures 5 à 7.

Le dispositif 40 est positionné sur la platine 10, à une extrémité arrière 33 du bras 30. Entre autres éléments constitutifs, le dispositif 40 comprend un organe d'appui 50, une tige 60 et une vis de réglage 70. La tige 60 s'étend selon un axe de tige A60 sensiblement vertical, tandis que la vis 70 s'étend selon un axe de vis A70 horizontal. Les axes A60 et A70 sont sécants.

Le dispositif 40 peut être actionné manuellement en faisant pivoter la vis 70 à l'aide d'un outil 4.

La platine 10 est réalisée d'une seule pièce, de préférence par emboutissage. La platine 10 comprend une bordure périphérique plane 11 et une cavité centrale 12. La bordure 11 s'étend tout autour de la cavité 12. La cavité 12 comprend une portion supérieure 13, une portion inférieure 14 et une portion intermédiaire 15. Les portions 13 et 14 comportent des orifices traversant 16, permettant le passage de vis pour fixer la platine à la surface 3. Deux fentes 17 sont ménagées horizontalement entre la portion intermédiaire 15 et, respectivement, les portions 13 et 14. Les fentes 17 sont prévues pour le passage de l'organe 50.

Des caches 18 et 19 sont prévus pour recouvrir partiellement la platine 10 et le dispositif 40, lorsque le système 1 est assemblé.

La structure avant 20 comprend un montant vertical central 21, un profilé horizontal supérieur 22 et un profilé horizontal inférieur 23. Les profilés 22 et 23 sont fixés en leur centre aux extrémités, respectivement supérieure et inférieure, du montant 21. La structure 20 forme ainsi un H incliné à 90 degrés, auquel l'écran 2 est fixé.

Le bras 30 comprend une section allongée 31, qui s'étend entre l'extrémité avant 32 et l'extrémité arrière 33 du bras 30. La section 31 peut comporter des évidements 34 pour son allégement, tout en présentant une résistance mécanique suffisante pour l'application visée.

L'extrémité avant 32 du bras 30 est articulée sur le montant 21 de la structure 20, en liaison pivot autour d'un axe de rotation vertical. Cette liaison pivot, connue en soi, n'est pas représentée dans un but de simplification.

L'extrémité arrière 33 du bras 30 est articulée sur la tige 60 du dispositif 40, en liaison pivot autour de l'axe de tige A60. L'extrémité 33 repose sur une entretoise 38, qui elle-même repose sur une portion inférieure 52 de l'organe d'appui 50. L'entretoise 38 est en alliage métallique, de préférence en alliage d'aluminium. En fonction de la hauteur du bras 30, le système 1 peut être dépourvu d'entretoise 38.

L'organe 50 est une pièce monobloc distincte de la platine 10. L'organe 50 est solidarisé à la platine 10, de préférence par soudage.

L'organe 50 comprend une partie arrière, non visible sur les figures, logée verticalement derrière la portion 15 et prévue pour venir en appui contre le mur. L'organe 50 comprend une partie supérieure 51 et une partie inférieure 52 avant, disposées en saillie sur la face avant de la platine 10. Les parties avant 51 et 52 sont reliées à la partie arrière à travers les fentes 17 ménagées dans la platine 10.

La partie supérieure 51 forme une languette horizontale pourvue d'un orifice 55 de section circulaire. La partie inférieure 52 comporte une languette horizontale 53 solidaire de la partie arrière, ainsi que deux pattes latérales verticales 54 qui s'étendent vers le bas depuis la languette 53. La partie 52 forme ainsi un U inversé. La languette 53 est pourvue d'un orifice oblong 56, allongé suivant une direction horizontale, parallèlement à l'axe de vis A70. Les orifices 55 et 56 sont alignés verticalement et prévus pour recevoir la tige 60. Les pattes latérales 54 sont chacune pourvue d'un orifice oblong 57, allongé suivant une direction verticale, perpendiculairement à l'axe de vis A70. Les orifices 57 sont alignés horizontalement et prévus pour recevoir la vis 70.

La tige 60 est une pièce monobloc comprenant a un corps allongé 61 de forme cylindrique, qui s'étend selon l'axe de vis A60 entre une extrémité supérieure 62 et une extrémité inférieure 63. L'extrémité 62 est logée dans l'orifice 55 de l'organe 50, tandis que l'extrémité 63 traverse l'orifice oblong 56 et s'étend entre les pattes 54 de l'organe 50. L'extrémité 63 est traversée par un alésage taraudé 64, prévu pour recevoir la vis 70.

La vis 70 est une pièce monobloc comportant un corps fileté 71, qui s'étend selon l'axe de vis A60 entre une tête de vis 72 et une extrémité 73 opposée à la tête de vis 72. La vis 70 traverse les orifices 57 ménagés dans les pattes 54 de l'organe 50. Le corps fileté 71 est logé dans l'alésage taraudé 64 de la tige 60, entre les pattes 54. La tête 72 et l'extrémité 73 sont situées de part et d'autre des pattes 54.

La tête 72 est pourvue d'un trou hexagonal 74 prévu pour recevoir l'outil 4, conformé comme une clé à six pans. Une rotation de l'outil 4 logé dans le trou 74 entraîne la vis 70 en rotation autour de l'axe A70. En alternative, l'outil 4 et la tête 72 peut présenter toutes configurations complémentaires adaptées à l'application visée.

Différents éléments 81, 82, 83 et 84 sont positionnés sur la vis 70. Une rondelle ressort 81 (également appelée rondelle Belleville) est positionnée en appui contre la face externe de chaque patte 54. Une rondelle plate 82 est positionnée en appui contre la rondelle ressort 81. D'un côté, la rondelle plate 82 est en appui contre la tête de vis 72. De l'autre côté, la rondelle plate 82 est en appui contre un ensemble écrou 83 et contre-écrou 84. Le contre-écrou 84 peut être un écrou autobloquant, par exemple un écrou Nylstop (marque déposée). En pratique, la déformation des rondelles ressort 81 permet de supprimer les jeux d'assemblage dans le dispositif 40, et d'encaisser le débattement angulaire de la vis 70 lorsque celle-ci est actionnée par l'outil 4.

Lorsque le système 1 est assemblé, comme montré à la figure 1, le cache supérieur 18 recouvre la portion supérieure 13 de la platine 10, tandis que le cache inférieur 19 recouvre la portion inférieure 14 de la platine 10. En outre, le cache 18 entoure partiellement l'extrémité supérieure 62 de la tige 60, en reposant sur la partie supérieure 51 de l'organe 50. Par ailleurs, la partie inférieure 52 de l'organe 50, l'extrémité inférieure 63 de la tige 60, la vis de réglage 70, ainsi que les éléments 81, 82, 83, 84 et 85, sont logés sous le cache 19.

Sur les figures 5 à 7, la platine 10 est montrée fixée de façon "idéale" sur la surface 3, c'est-à-dire que les bords verticaux de la platine 10 sont disposés parfaitement verticalement, tandis que les bords horizontaux de la platine 10 sont disposés parfaitement horizontalement. En outre, on considère que le bras 30 et la structure 20 sont assemblés de façon "idéale", c'est-à-dire que la section 31 et les montants 24 s'étendent dans des plans parallèles entre eux.

On définit un plan horizontal de référence P0, associé à la pièce comprenant le système 1, l'écran 2 et la surface 3. On définit également un plan horizontal P1, associé au système 1, plus précisément au bras 30 et à la structure 20. On définit également un axe de référence A40, associé au dispositif 40, au centre des orifices 55 et 56. L'axe A40 est perpendiculaire au plan P0. On définit également un plan vertical de référence P40, associé au dispositif 40, incluant les axes A40 et A70.

Lorsque le dispositif 40 est actionné par l'outil 4, la rotation de la vis 70 entraîne une inclinaison latérale de la tige 60. Comme le corps fileté 71 est logé dans l'alésage taraudé 64 ménagée à l'extrémité 63 de la tige 60, la rotation de la vis 70 dans un premier sens de rotation entraîne le déplacement de l'extrémité 63 selon une première direction latérale, tandis que la rotation de la vis 70 dans un deuxième sens de rotation entraîne le déplacement de l'extrémité 63 selon une deuxième direction latérale. La forme oblongue de l'orifice 56 autorise le débattement latéral de la tige 60. Comme l'extrémité 62 de la tige 60 est logée dans l'orifice 55 de l'organe 50, cette extrémité 62 n'est pas déplacée latéralement, contrairement à l'extrémité 63.

Au cours du réglage de l'horizontalité du bras 20 et de la structure 30, le plan P0 est fixe, tandis que le plan P1 est mobile. En outre, les axes A40 et A70 sont fixes, tandis que l'axe A60 est mobile. Plus précisément, l'axe A60 est inclinable latéralement d'un côté ou de l'autre dans le plan vertical P40 incluant l'axe A70.

Sur la figure 5, les axes A40 et A60 coïncident, et de même les plans P0 et P1 coïncident. Sur la figure 6, l'axe A60 est incliné sur la gauche d'un angle α1 par rapport à l'axe A40, et ainsi le plan P1 est incliné vers le haut de l'angle α1 par rapport au plan P0. Sur la figure 7, l'axe A60 est incliné sur la droite de l'angle α1 par rapport à l'axe A40, et ainsi le plan P1 est incliné vers le bas de l'angle α1 par rapport au plan P0.

En pratique, la platine 10 n'est pas forcément fixée de manière parfaitement droite. Ainsi, le dispositif de réglage 40 permet de régler l'horizontalité de l'écran 2 de manière simple et pratique, pour le confort de l'utilisateur de l'écran 2.

Grâce à la construction du dispositif 40, l'horizontalité peut être réglée avec une très grande précision.

A titre d'exemples :
- un tour (rotation à 360 degrés) de la vis 70 entraîne un déplacement latéral de 1,25 millimètres de l'extrémité 63 de la tige 60, ce qui provoque une inclinaison suivant l'angle α1 de l'ordre de ± 0,66 degrés ;
- un quart de tour de la vis provoque une inclinaison suivant l'angle α1 de l'ordre de ± 0,165 degrés
- un déplacement latéral de 4 millimètres de l'extrémité 63 de la tige 60 provoque une inclinaison suivant l'angle α1 de l'ordre de ± 2,1 degrés.

Bien entendu, les valeurs données ci-dessus peuvent varier en fonction des caractéristiques des éléments constitutifs du dispositif 40, notamment le pas de la vis 70, la longueur de la tige 60, etc.

Le dispositif 40 selon l'invention présente une construction relativement simple et résistante, avec un nombre d'éléments constitutifs réduit, en comparaison avec certains dispositifs existants.

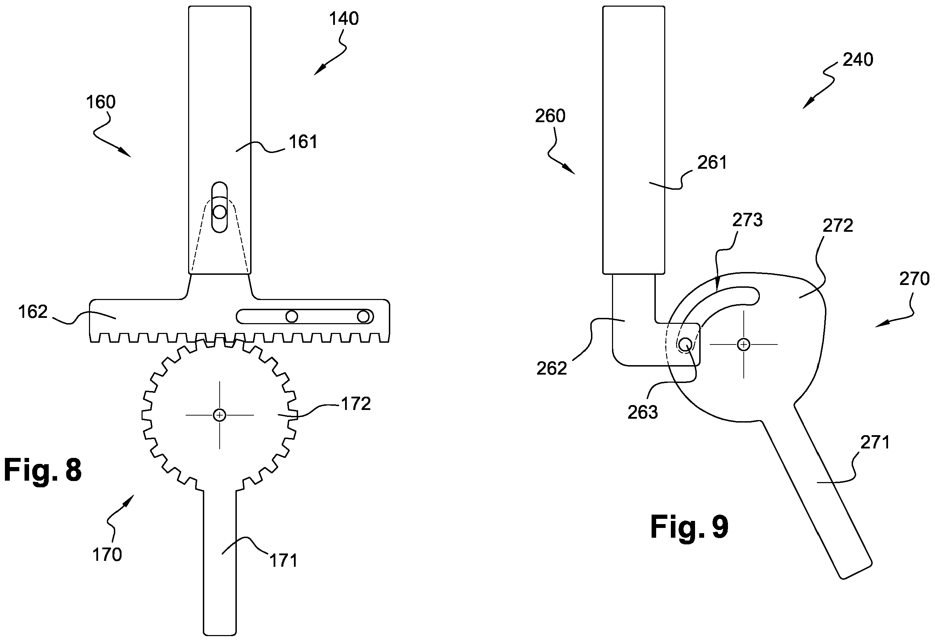

Des dispositifs 140 et 240 conformes à un second mode et un troisième mode de réalisation de l'invention sont montrés respectivement aux figures 8 et 9. La platine 10 et les organes d'appui 50 ne sont pas représentés dans un but de simplification.

Sur la figure 8, le dispositif 140 comprend un premier élément 160 et un second élément 170. Le premier élément 160 comprend une tige 161 qui supporte l'extrémité arrière 33 du bras articulé 30 et une crémaillère 162 qui coopère avec le second élément 170. Le second élément 170 comprend un manche 171 et une roue dentée 172 qui coopère avec la crémaillère 162. Lorsque le manche 171 est actionné, la rotation de la roue 172 entraîne un déplacement latéral de la crémaillère 162 et une inclinaison latérale de la tige 161.

Sur la figure 9, le dispositif 240 comprend un premier élément 260 et un second élément 270. Le premier élément 260 comprend une tige 261 qui supporte l'extrémité arrière 33 du bras articulé 30 et une portion excentrique 262 munie d'un pion 263 qui coopère avec le second élément 270. Le second élément 270 comprend un manche 271 et une came 272 munie d'une rainure courbée 273 qui reçoit le pion 263. Lorsque le manche 271 est actionné, la rotation de la came 272 entraîne un déplacement latéral de la portion excentrique 262 et une inclinaison latérale de la tige 261.

Par ailleurs, le système support 1 peut être conformé différemment des figures 1 à 9 sans sortir du cadre de l'invention.

En pratique, les éléments constitutifs du système 1 peuvent présenter tous matériaux et dimensions adaptés à l'application visée, et notamment aux dimensions et au poids de l'écran à supporter. Par exemple, le bras 30 peut présenter différentes dimensions (longueur, largeur et/ou hauteur).

Selon une variante non représentée, la platine 10 et l'organe 50 peuvent constituer une unique pièce.

Selon une autre variante non représentée, le bras 30 peut être constitué de plusieurs sections 31 articulées entre elles, incluant une section arrière articulée sur la tige 60 du dispositif 40 et une section avant articulée sur la structure avant 20.

Selon une autre variante non représentée, le système 1 peut comporter plusieurs bras 30 disposés les uns au-dessus des autres et articulés sur le dispositif 40.

Selon une autre variante non représentée, le dispositif 40 peut être actionné par un ensemble motorisé, conçu pour entraîner la vis 70 en rotation autour de l'axe A70, sélectivement dans un sens ou dans l'autre.

Selon une autre variante non représentée, le dispositif 40 peut comporter une plaque soudée sur la tige 60. La vis 70 est disposée à travers la plaque. Les axes A60 et A70 ne sont plus situés dans le même plan P40. Une rotation de la vis 70 entraîne une inclinaison latérale de la tige 60, ce qui permet de régler l'horizontalité de l'écran 2.

En outre, les caractéristiques techniques des différents modes de réalisation et variantes mentionnés ci-dessus peuvent être, en totalité ou pour certaines d'entre elles, combinées entre elles. Ainsi, le système 1 peut être adapté en termes de coût, de fonctionnalités, d'ergonomie et de performance.

## Revendications

1. Système support (1) pour écran plat (2), de type plasma, LCD, LED, OLED ou similaire, comprenant :
- une platine arrière (10) conçue pour être fixée sur une surface de fixation (3) verticale ;
- une structure avant (20) conçue pour supporter l'écran plat (2) ;
- un bras articulé (30) reliant la platine arrière (10) et la structure avant (20) ; et
- un dispositif de réglage (40 ; 140 ; 240) de l'horizontalité du bras articulé (30) et de la structure avant (20) ;
**caractérisé en ce que** le dispositif de réglage (40 ; 140 ; 240) est agencé sur la platine arrière (10) est actionnable alors que la platine arrière (10) est fixée à la surface de fixation (3), et comprend :
- un premier élément (60 ; 160 ; 260) comprenant une tige (60 ; 161 ; 261) qui s'étend selon un axe de tige (A60) sensiblement vertical et supporte l'extrémité arrière (33) du bras articulé (30) ; et
- un second élément (70 ; 170 ; 270) coopérant avec le premier élément (60 ; 160 ; 260) ;
l'extrémité arrière (33) du bras (30) étant articulé sur la tige (60 ; 161 ; 261), en liaison pivot autour de l'axe (A60) de ladite tige (60 ; 161 ; 261) ;
une rotation du second élément (70 ; 170 ; 270) entraînant une inclinaison latérale de la tige (60 ; 161 ; 261), du bras (30) et de la structure avant (20) ;
dans lequel :
- soit le premier élément (60) comprend la tige (60), tandis que le second élément est une vis de réglage (70) qui s'étend selon un axe de vis (A70) sensiblement horizontal et coopère avec la tige (60) ;
- soit le premier élément (160) comprend la tige (161) et une crémaillère (162) qui coopère avec le second élément (170), lequel comprend un manche (171) et une roue dentée (172) qui coopère avec la crémaillère (162) ; ou
- soit le premier élément (260) comprend la tige (261) et une portion excentrique (262) munie d'un pion (263) qui coopère avec le second élément (270), lequel comprend un manche (271) et une came (272) munie d'une rainure courbée (273) qui reçoit le pion (263).

2. Système support (1) selon la revendication 1, dans le cas où le second élément est la vis de réglage (70), **caractérisé en ce que** la vis de réglage (70) est disposée à travers la tige (60).

3. Système support (1) selon l'une des revendications 1 ou 2, **caractérisé en ce que** le dispositif de réglage (40 ; 140 ; 240) comprend un organe d'appui (50) qui est solidaire de la platine arrière (10) et qui comporte des orifices (55 ; 56) de montage du premier élément (60) et des orifices (57) de montage du second élément (70).

4. Système support (1) selon la revendication 3, **caractérisé en ce qu'**une rondelle ressort (81) est positionnée entre une tête (72) du second élément (70) et une portion verticale (54) de l'organe d'appui (50).

5. Système support (1) selon la revendication 4, **caractérisé en ce qu'**une deuxième rondelle ressort (81) est positionnée entre un ensemble écrou contre-écrou (83, 84) et une autre portion verticale (54) de l'organe d'appui (50), à une extrémité (73) du second élément (70) opposée à la tête(72) du second élément (70).

6. Système support (1) selon l'une des revendications 3 à 5, **caractérisé en ce que** les orifices (55 ; 56) de montage du premier élément (60) incluent, d'une part, un orifice oblong (56) ménagé à proximité du second élément (70) et, d'autre part, un orifice circulaire (55) ménagé à distance du second élément (70).

7. Système support (1) selon l'une des revendications 3 à 6, **caractérisé en ce que** les orifices (57) de montage du second élément (70) sont des orifices oblongs allongés selon une direction verticale.

8. Procédé de mise en oeuvre d'un système support (1) selon l'une des revendications précédentes, **caractérisé en ce que** le procédé comprend les étapes successives suivantes :
a) fixer la platine arrière (10) sur la surface de fixation (3) verticale ; puis
b) actionner en rotation le second élément (70 ; 170 ; 270) du dispositif de réglage (40 ; 140 ; 240) agencé sur la platine arrière (10), pour incliner latéralement la tige (60 ; 161 ; 261) et ainsi régler l'horizontalité du bras articulé (30) et de la structure avant (20).

## Patentansprüche

1. Halterung (1) für Flachbildschirm (2) vom Typ Plasma, LCD, LED, OLED oder ähnlichem, umfassend:
- eine hintere Platine (10), die zur Befestigung auf einer vertikalen Befestigungsfläche (3) konzipiert ist;
- eine Vorderkonstruktion (20), die zum Halten des Flachbildschirms (2) konzipiert ist;
- ein Gelenkarm (30), der die hintere Platine (10) und die Vorderkonstruktion (20) verbindet;
und
- eine Einstellvorrichtung (40; 140; 240) für die horizontale Position des Gelenkarms (30) und der Vorderkonstruktion (20);
**dadurch gekennzeichnet, dass** die Einstellvorrichtung (40; 140; 240) auf der hinteren Platine (10) angeordnet ist und betätigt werden kann, während die hintere Platine (10) auf der Befestigungsfläche (3) befestigt ist, und umfasst:
- ein erstes Element (60; 160; 260), das eine Stange (60; 161; 261) umfasst, die entlang einer Stangenachse (A60) verläuft, die im Wesentlichen vertikal ist und das hintere Endstück (33) des Gelenkarms (30) trägt; und
- ein zweites Element (70; 170; 270), das mit dem ersten Element (60; 160; 260) zusammenarbeitet;
wobei das hintere Endstück (33) des Arms (30) über ein Gelenk an der Stange (60; 161; 261) um die Achse (A60) dieser Stange (60; 161; 261) schwenkbar befestigt ist;
wobei die Drehung des zweites Elementes (70; 170; 270) zu einer seitlichen Neigung der Stange (60; 161 ; 261), des Arms (30) und der Vorderkonstruktion (20) führt;
darin:
- enthält entweder das erste Element (60) die Stange (60), während das zweite Element eine Einstellschraube (70) ist, die entlang einer im Wesentlichen horizontalen Schraubenachse (A70) verläuft und mit der Stange (60) zusammenarbeitet;
- oder das erste Element (160) enthält die Stange (161) und eine Zahnstange (162), die mit dem zweiten Element (170) zusammenarbeitet, das einen Griff (171) und ein Zahnrad (172) enthält, das mit der Zahnstange (162) zusammenarbeitet; oder
- das erste Element (260) enthält die Stange (261) und einen exzentrischen Abschnitt (262), der mit einem Zapfen (263) versehen ist, der mit dem zweiten Element (270) zusammenarbeitet, das einen Griff (271) und einen Nocken (172) umfasst, der mit einer gekrümmten Nut (273) versehen ist, die den Zapfen (263) aufnimmt.

2. Halterung (1) nach Anspruch 1, für den Fall, dass es sich bei dem zweiten Element um die Einstellschraube (70) handelt, **dadurch gekennzeichnet, dass** die Einstellschraube (70) durch die Stange (60) hindurchführt.

3. Halterung (1) nach einem der Ansprüche 1 oder 2, **dadurch gekennzeichnet, dass** die Einstellvorrichtung (40; 140; 240) eine Auflagefläche (50) umfasst, die mit der hinteren Platine (10) fest verbunden ist, und die Öffnungen (55 ; 56) zur Montage des ersten Elementes (60) sowie Öffnungen (57) zur Montage des zweiten Elementes (70) enthält.

4. Halterung (1) gemäß Anspruch 3, **dadurch gekennzeichnet, dass** eine Tellerfeder (81) zwischen einem Kopf (72) des zweiten Elementes (70) und einem vertikalen Abschnitt (54) der Auflagefläche (50) vorgesehen ist.

5. Halterung (1) gemäß Anspruch 4, **dadurch gekennzeichnet, dass** eine zweite Tellerfeder (81) zwischen einer Schraube-Mutter-Einheit (83, 84) und einem anderen vertikalen Abschnitt (54) der Auflagefläche (50), an einem Endstück (73) des zweiten Elementes (70), entgegengesetzt zum Kopf (72) des zweiten Elementes (70) angeordnet ist.

6. Halterung (1) nach einem der Ansprüche 3 bis 5, **dadurch gekennzeichnet, dass** die Öffnungen (55 ; 56) zur Montage des ersten Elementes (60) erstens eine längliche Öffnung (56), die in der Nähe des zweiten Elementes (70) ausgespart ist, und zweitens eine runde Öffnung (55), die in gewisser Entfernung zum zweiten Element (70) ausgespart ist, umfassen.

7. Halterung (1) nach einem der Ansprüche 3 bis 6, **dadurch gekennzeichnet, dass** die Montageöffnungen (57) des zweiten Elementes (70) in vertikaler Richtung längliche Öffnungen sind.

8. Verfahren zum Einsatz einer Halterung (1) nach einem der vorhergehenden Ansprüche, **dadurch gekennzeichnet, dass** das Verfahren die folgenden aufeinander folgenden Schritte umfasst:
a) Befestigung der hinteren Platine (10) auf der vertikalen Befestigungsfläche (3); dann
b) Drehen des zweiten Elementes (70; 170 ; 270) der Einstellvorrichtung (40; 140; 240), die auf der hinteren Platine (10) angeordnet ist, um die Stange (60; 161; 261) seitlich zu neigen und so die horizontale Position des Gelenkarms (30) und der Vorderkonstruktion (20) einzustellen.

## Claims

1. Support system (1) for a flat screen (2) of the plasma, LCD, LED, OLED or similar type, comprising:
- a rear plate (10) designed for attachment to a vertical attaching surface (3);
- a front structure (20) designed to support the flat screen (2);
- an articulated arm (30) connecting the rear plate (10) and the front structure (20); and
- an adjusting device (40; 140; 240) of the horizontality of the articulated arm (30) and of the front structure (20);
**characterized in that** the adjusting device (40; 140; 240) is arranged on the rear plate (10) and can be operated when the rear plate (10) is attached to the attaching surface (3), and comprises:
- a first part (60; 160; 260) comprising a rod (60; 161; 261) extending along a rod axis (A60) which is more or less vertical and supporting the rear end (33) of the articulated arm (30); and
- a second part (70; 170; 270) working together with the first part (60; 160; 260); the rear end (33) of the arm (30) being articulated on the rod (60; 161; 261) by a pivoting link about the axis (A60) of the said rod (60; 161; 261);
a rotation of the second part (70; 170; 270) causing a lateral inclining of the rod (60; 161; 261), of the arm (30) and of the front structure (20);
in which:
- the first part (60) comprises the rod (60) while the second part is an adjusting screw (70) extending according to the axis of the screw (A70) which is more or less horizontal and works together with the rod (60); or
- the first part (160) comprises the rod (161) and a rack (162) working together with the second part (170) which includes a handle (171) and a gear wheel (172) working together with the rack (162); or
- the first part (260) comprises the rod (261) and an eccentric portion (262) provided with a dowel (263) working together with the second part (270) which comprises a handle (271) and a cam (272) provided with a curved groove (273) which accommodates the dowel (263).

2. Support system (1) according to claim 1, in the case where the second part is an adjusting screw (70), **characterized in that** the adjusting screw (70) is arranged through the rod (60).

3. Support system (1) according to one of the claims 1 or 2, **characterized in that** the adjusting device (40; 140; 240) includes a bearing device (50) which is integral with the rear plate (10) and includes holes (55; 56) for the assembly of the first part (60) and holes (57) for the assembly of the second part (70).

4. Support system (1) according to claim 3, **characterized in that** a spring washer (81) is placed between a head (72) of the second part (70) and a vertical portion (54) of the supporting device (50).

5. Support system (1) according to claim 4, **characterized in that** a second spring washer (81) is placed between a nut and locknut assembly (83, 84) and another vertical portion (54) of the supporting device (50) at one end (73) of the second part (70) opposite the head (72) of the second part (70).

6. Support system (1) according to one of the claims 3 to 5, **characterized in that** the holes (55; 56) for the assembly of the first part (60) comprise on the one hand, an oblong hole (56) arranged near the second part (70) and on the other hand, a circular hole (55) arranged at a distance from the second part (70).

7. Support system (1) according to one of the claims 3 to 6, **characterized in that** the assembly holes (57) of the second part (70) are oblong holes extended in a vertical direction.

8. Method of implementing a support system (1) according to one of the previous claims, **characterized in that** the method comprises the following successive steps:
a) attaching the rear plate (10) to the vertical attaching surface (3); then
b) triggering the rotation of the second part (70; 170; 270) of the adjusting device (40; 140; 240) arranged on the rear plate (10), to incline laterally the rod (60; 161; 261) and **in that** way adjust the horizontality of the articulated arm (30) and of the front structure (20).
